# EUROPEAN PATENT APPLICATION

(11) **EP 2 541 059 A2**
(43) Date of publication of application: **02.01.2013**
(21) Application number: 12004481.3
(22) Date of filing: 14.06.2012
(51) Int. Cl.: F03D 11/04

(54) **Footing for wind turbine towers**

(30) Priority: 28.06.2011 ES 201100726
(71) Applicant: Gamesa Innovation & Technology, S.L., 31621 Sarriguren (ES)
(72) Inventor: Gallardo Hernandez, Rodrigo, 31621 Sarriguren (ES); Gonzalez Santamarta, Francisco Javier, 48170 Zamudio (ES); Doblas Tellechea, Naiara, 48170 Zamudio (ES); Ruiz Urien, Ignacio, 48170 Zamudio (ES)

(57) **Abstract**

Footing used for the foundation of a wind turbine tower characterized because it provides a stable horizontal platform (1) located at the surface, upon which the tower sections and the heavy elements that are subsequently mounted, viz., gearbox, generator, hub and blades, can be set without sinking.

The footing is characterized by its inverted truncated cone shape, and by the savings in material estimated at 20%, as well as for its union with the tower (4) through a pedestal (3) and its corresponding embedded tensioning elements in the footing.

## Description

### Object of the invention.

The present invention refers to a footing used in the tower foundation. This footing provides a stable surface for placement and handling of, on the one hand, the various sections of the tower during their assembly, and, on the other, the heavy elements included inside the wind turbine.

### Background of the invention.

Wind turbine towers stand on a ground supported by a footing. The footings used differ in design and sizes, though the tendency is to save on material as much as possible while still conserving the features necessary to support the tower, nacelle and other elements making up the wind tower. The material used for composing the footing is concrete, which is poured directly into the hole dug into the ground and allowed to set prior to erecting the tower. Once the tower has been completed, the nacelle is brought up followed by the heavy elements, the hub and blades.

The tower comprises various sectors that are gradually assembled. A crane is employed for putting these sectors together, hoisting each one from the ground and assembling them in turn until finished.

The heavy elements inside the nacelle (generator, gearbox), the hub, the tower sectors, etc., are accumulated next to the tower while waiting for their turn to be mounted and, in order to facilitate their handling and hoisting, they must be placed upon a flat and solid surface. Currently, the ground surrounding the tower is leveled and adapted on a surface equivalent to the extension reach as the footing. Notwithstanding this solution, it is not deemed to be an ideal solution.

Along these lines, Patent EP1526278 describes a concrete foundation footing for a wind turbine tower that determines a main part connected to foundation piles and comprises a cylindrical part and a frustoconical part. This main part is in turn covered around its circumferential borders with ballast material such as sand, onto which a layer of moved earth is placed so as to integrate the foundation with the surrounding landscape.

This solution does not take into account that setting tower sections, which are in line to be hoisted, onto the ground around the footing causes this area to sink, which consequently calls for the cementation of a platform around the tower with the subsequent rise in the civil engineering price for wind turbine.

### Description of the invention

An object of the invention is to create a footing, preferably of concrete, so as to erect a tower comprising different sectors, the nacelle and its corresponding internal elements, the hub and the blades.

Another object of the invention is to furnish the footing with a broad radial surface with respect to the central point, on which the tower is erected.

And finally, another object of this invention is to furnish the tower pedestal with a footing having a horizontal extension close to ground level with a sufficient consistency so as to fulfill its purpose of supporting the different tower sections during assembly.

One of the primary advantages of the present footing is the minimizing of material used, which benefits in terms of considerable savings, setting time and consequently assembly, which results in cost benefits for material and time.

The foregoing is attained with a footing having the shape of a truncated cone, set inverted underneath the ground. Thus, the larger base is closer to the surface, while the smaller base is set deep into the ground. With this new arrangement, the estimated material savings is 20%. Additional costs for current footings include the slabs added to the surface to make the upper part of the foundation flat and allow for the setting of cranes, tower sections and heavy elements such as the gearbox, generator, hub, etc.

### Brief description of the drawings.

The following figures have been attached with a view to explaining how the footing is constituted, as well as its positioning with respect to the floor:
Figure 1 shows an overhead and plant view of the footing and its positioning with respect to the ground.
Figure 2 shows a general view of a wind turbine and its foundation with the footing, object of this invention.
Figure 3 represents a detail of the footing and its union with the concrete tower.

### Description of the preferential embodiment

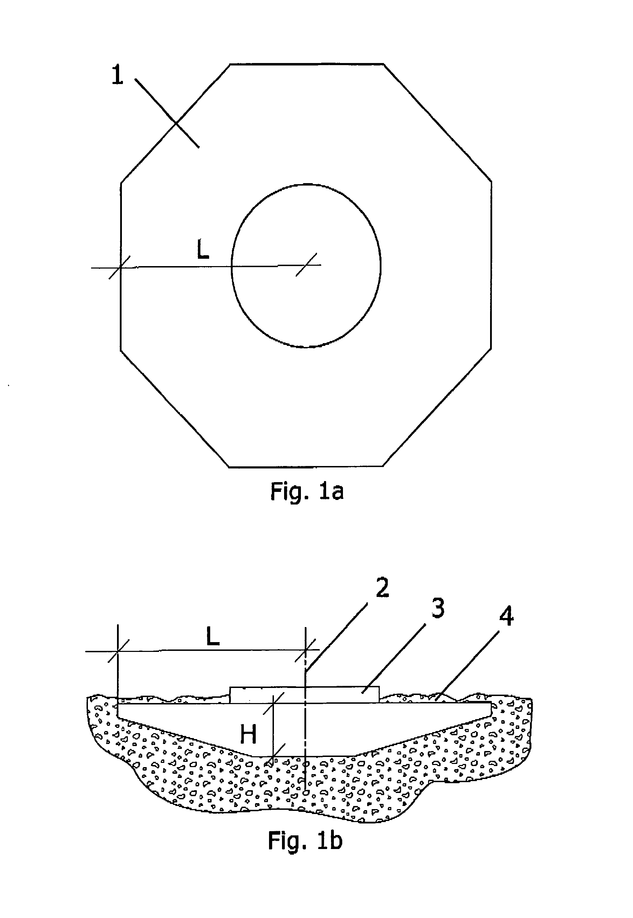

As shown in figure 1a, the footing seen from above presents a horizontal surface (1) having a circular or any other polyhedron shape with more than two sides obtained from a discretization of a circumference (hexagon, octagon, etc.), which extends radially from the axis (2) at a length of L. If a section were made as illustrated in figure 1b, the lower part of the footing would form a truncated cone inverted at a height H. The part composed in this way is gapless compact reinforced concrete. The upper horizontal part (1) has a pedestal (3) that connects with the tower (not shown in the figure).

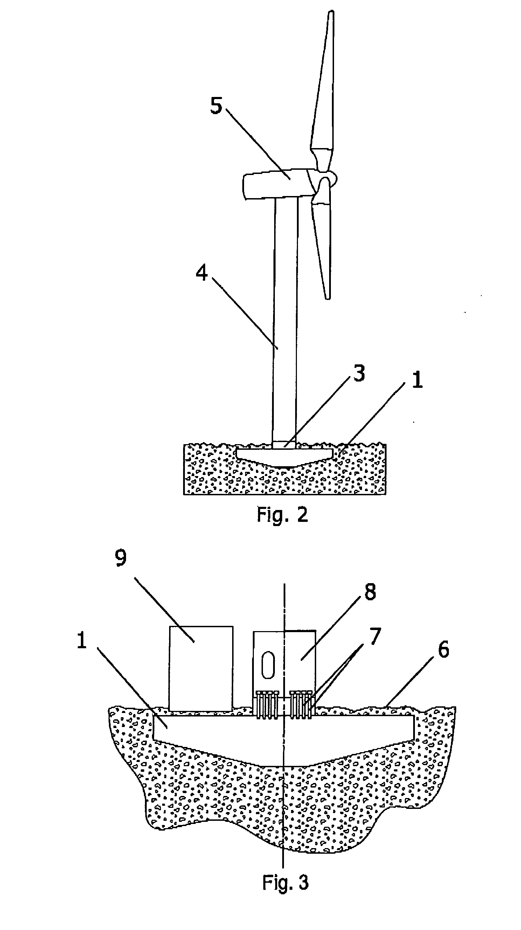

Figure 2 shows the footing joined to the tower (4) and wind turbine (5). The horizontal surface (1) permits the setting down of tower sections and heavy elements such as the gearbox, generator, hub, etc. The relationship between L and H is given by the conditions of the ground. There are highly resistant terrains (largely made up of rock) requiring a horizontal surface (1) with a length 2L of approximately 20 meters. Contrariwise, weaker terrains call for a horizontal surface (1) with dimensions for 2L closer to 30 meters so that the footing is firmly set. For the foregoing, distance L is equal to the radius of the circumference that circumscribes any possible polyhedron and can vary between a minimum L of 7.5 meters and a maximum L of 15 meters. In addition, height H has minimum and maximum values of 1.5 and 5 meters respectively.

The pedestal (3) for connection with the tower (4) is at ground level, so as to cover the entire horizontal surface of the footing (1) with a layer of compact and tamped material.

Turning to the constitution of the footing, the first step involves excavating based on the type of terrain with a view to having the base of the excavation in the shape of the footing, or filling it in to create the desired geometry. In sloping areas, spots with loose ground must be compacted well, since these are the areas where maximum tension occurs.

The manner to proceed is as follows: first use the concrete base, adhering to the shape of the footing. Next in line to be placed are the lower rebars, the bar cage, the footing cut rebars and the braces around the bars; lastly placing the upper rebar. Rebar placing is followed by concrete pouring. The last stage consists of concrete setting and curing.

As shown in figure 3, the footing is covered with a layer of earth (6) which is compacted once the construction process has been completed. The pedestal (3) remains above the surface with its bars (7), which constitute the connection system for the tower (4) with the foundation. These connection systems are non-adhering tensioning elements embedded into the footing. Once the first section of the tower (8) has been placed onto the pedestal, the bars (7) are then anchored. In the meanwhile, the second tower section (9) is located on the layer of compact ground (6) and there is no danger that it will sink, since the horizontal surface (1) of the footing provides it with a suitable seat.

## Claims

1. Footing for a wind turbine tower **characterized by** being furnished with:
- an upper horizontal part (1) extending radially from the axis (2) and passing through the center of the tower for a distance L,
- a second lower part in the shape of an inverted truncated cone having a height H and forming a single piece without internal gaps, completely compacted
- and lastly, both parts remain connected by the setting of their constituent material.

2. Footing for a wind turbine tower according to the first claim, characterized because the upper horizontal surface (1) determines a circle or polyhedron shape of more than two sides.

3. Footing for a wind turbine tower according to the first claim, characterized because the material composing the footing is concrete poured into a rebar structure supported by the prepared terrain.

4. Footing for a wind turbine tower according to the first claim, characterized because the distance L can vary between 7.5 and 15 meters while the height H can have values between 1.5 and 5 meters.

5. Footing for a wind turbine tower according to the first claim, characterized because the foundation is covered with a layer of earth (6) which is compacted once the construction process has been completed.

6. Footing for a wind turbine tower according to the first claim, characterized because the connection with the first section of the tower (8) is made with a pedestal (3) by some bars (7) embedded in the footing.
